Europäisches Patentamt

European Patent Office

Office européen des brevets

(19)

(11) Veröffentlichungsnummer : **0 082 490**
**B1**

(12)     # EUROPÄISCHE PATENTSCHRIFT

(45) Veröffentlichungstag der Patentschrift :
01.10.86

(21) Anmeldenummer : 82111691.0

(22) Anmeldetag : 16.12.82

(51) Int. Cl.⁴ : **E 04 D   5/06, B 29 D   9/00,**
**C 08 L 23/16, B 32 B 27/00**

(54) Dichtungsbahn aus elastomeren Kunststoffen.

(30) Priorität : 17.12.81 DE 3150021

(43) Veröffentlichungstag der Anmeldung :
29.06.83 Patentblatt 83/26

(45) Bekanntmachung des Hinweises auf die Patenterteilung : 01.10.86 Patentblatt 86/40

(84) Benannte Vertragsstaaten :
AT BE CH DE FR GB IT LI LU NL SE

(56) Entgegenhaltungen :
DE-A- 2 628 741
FR-A- 1 324 058
FR-A- 2 021 922
NL-A- 6 809 254

(73) Patentinhaber : DYNAMIT NOBEL AKTIENGESELL-
SCHAFT
Postfach 1209
D-5210 Troisdorf, Bez. Köln (DE)

(72) Erfinder : Kühnel, Werner

D-5206 Neunkirchen-Schöneshof (DE)
Erfinder : Pütz, Peter
Agnesstrasse 1
D-5205 St. Augustin-Menden (DE)
Erfinder : Simm, Manfred
Güldenbergstrasse 1
D-5210 Troisdorf (DE)
Erfinder : Spielau, Paul, Dr.
Von-Gogh-Platz 10
D-5210 Troisdorf-Eschmar (DE)

EP 0 082 490 B1

## Beschreibung

Die Erfindung befaßt sich mit einer Dichtungsbahn für das Bauwesen aus mindestens einer Schicht aus elastomeren, thermisch und/oder durch Lösungsmittel bzw. Quellmittel verschweißbaren Kunststoffen aus Ethylen-Propylen-Dien-Terpolymeren und/oder Ethylen-Propylen-Copolymeren und ggf. üblichen Zusatzstoffen sowie einer textilen Verstärkungsschicht, die entweder zwischen zwei Schichten aus elastomerem Kunststoff eingebettet und/oder außenseitig auf einer Schicht aufgebracht ist.

Dichtungsbahnen bzw. -folien zum Abdichten von Flächen im Hoch-, Tief- und Ingenieurbau müssen eine Reihe verschiedener Eigenschaften aufweisen, um den gestellten Anforderungen bezüglich Wasserdichtigkeit und Witterungsbeständigkeit zu genügen. Zu diesen Eigenschaften gehören hohe mechanische Festigkeit und eine ausreichende Dehnung sowohl bei Raumtemperatur als auch höheren Temperaturen bis etwa 80 °C, langjährige Beständigkeit gegen Witterungseinflüsse, Lichtechtheit und UV-Beständigkeit, leichte Verbindbarkeit der Folienbahnen untereinander zu größeren Planen und Alterungsbeständigkeit sowie biologische Resistenz. Es sind nun bereits Dichtungsbahnen unterschiedlicher Zusammensetzung auf Basis thermoplastischer Kunststoff oder elastomerer vulkanisierbarer oder vulkanisierter Kunststoffe oder thermoplastischer Kunststoffe mit elastomeren Eigenschaften bekannt geworden, die jedoch neben vorteilhaften Eigenschaften stets auch Nachteile aufweisen. Die bekannten thermoplastischen Dichtungsbahnen, z. B. auf der Basis von Weich-Polyvinylchlorid, Polyisobutylen, Acrylpolymeren oder mit Bitumen modifizierten Thermoplasten, lassen sich zwar einfach und einwandfrei an den Nahtstellen dicht verschweißen, sie sind jedoch gegen Temperatureinflüsse empfindlich. Diesen Nachteilen versucht man durch Auf- bzw. Einkaschieren von Geweben oder Vliesen aus textilen Fasern oder Glasfasern entgegenzuwirken, was jedoch nur teilweise erfolgreich ist.

Die bekannten Dichtungsbahnen aus vulkanisierbaren Kunststoffen, z. B. auf Basis Chloroprenkautschuk, Äthylen-Propylen-Dien-Terpolymeren, chlorsulfoniertem Polyäthylenkautschuk oder Butylkautschuk genügen zwar den mechanischen Festigkeitsanforderungen und sind witterungsbeständig, haben jedoch den erheblichen Nachteil, daß die nicht vulkanisierten Folien den mechanischen Anforderungen bei erhöhten Temperaturen nicht genügen und die vulkanisierten Dichtungsbahnen sich nicht miteinander verschweißen lassen, sondern nur schwer mittels Kleber oder Klebebänder o. dgl. dauerhaft dicht miteinander verbunden werden können, siehe z. B. DE-A-25 10 162 oder DE-B-22 33 199.

Eine Zwischenstellung nehmen hier die Dichtungsbahnen auf der Basis thermoplastischer Kunststoffe mit elastomeren Eigenschaften ein. Bei der Dichtungsbahn z. B. nach der DE-A-26 21 825 soll die Ausvulkanisation erst nach dem Verlegen auf dem Bau und nach dem Herstellen der Nahtverbindungen zwischen den Dichtungsbahnen erfolgen ; es besteht jedoch die Gefahr einer vorzeitigen Ausvulkanisation, wodurch dann das einfache Herstellen geschweißter Nahtverbindungen wiederum unmöglich gemacht ist. Bei der Dichtungsbahn nach der DE-A-22 19 147 hingegen wird ein unvulkanisiertes Gemisch aus thermoplastischen und elastomeren Kunststoffen eingesetzt, jedoch sind bei dieser Bahn die Nahtverbindungen ebenfalls nur mittels zusätzlicher Klebebänder herstellbar.

Neuerdings ist man dazu übergegangen, an Stelle der vorangehend beschriebenen, aus einem Material aufgebauten, einschichtigen, ggf. mit einer Verstärkungsanlage versehenen Kunststoff-Dichtungsbahnen auch mehrschichtige Dichtungsbahnen aus vulkanisierbaren Materialien herzustellen, wobei die Außenschichten gar nicht oder nur so weit ausvulkanisiert sind, daß sie noch thermisch und/oder durch Lösungsmittel bzw. Quellschweißmittel verschweißbar sind und mindestens eine ausvulkanisierte Schicht vorgesehen ist, siehe z. B. AT-B-290 612 bzw. DE-A-26 28 741. Nachteilig hierbei ist jedoch die Abhängigkeit von Art und Menge des eingesetzten Vulkanisationsbeschleunigers sowie der Zeitpunkt der Ausvulkanisation.

Die Erfindung hat sich der Aufgabe angenommen, eine Dichtungsbahn auf Basis elastomerer Kunststoffe zu schaffen, die den eingangs gestellten Anforderungen genügt, ohne die Nachteile der bekannten Dichtungsbahnen aufzuweisen. Die Erfindung geht dabei von einer Dichtungsbahn für das Bauwesen gemäß dem Oberbegriff des Anspruchs 1 aus. Erfindungsgemäß wird die Aufgabe für eine Dichtungsbahn dadurch gelöst, daß alle elastomeren Kunststoffe enthaltende Schichten vulkanisationsbeschleunigerfrei sind und als elastomere Kunststoffe Ethylen-Propylen-Dien-Terpolymeren und/oder Ethylen-Propylen-Copolymeren in einer Zusammensetzung

| 35 bis 46 | Gew.-% EPDM oder EPM oder Mischungen von EPDM oder EPM |
| 40 bis 58 | Gew.-% Füllstoffe, hiervon bis zu 50 Gew.-% Ruß |
| 5 bis 12 | Gew.-% Extender |
| 1,0 bis 0,1 | Gew.-% Stabilisatoren und Alterungsschutzmittel |
| 5 bis 1,9 | Gew.-% Gleitmittel und Verarbeitungshilfsmittel |

enthalten.

Die erfindungsgemäße Dichtungsbahn mit durch den Einsatz von elastomeren vulkanisierbaren aber nicht vulkanisierten d. h. unvernetzt gebliebenen Kunststoffen, weist deren vorteilhafte Eigenschaften wie Verschweißbarkeit, Witterungs- und Alterungsbeständigkeit unter anderem in den Außenschichten auf und erreicht durch eine spezielle Verstärkungsschicht nicht nur eine hohe Trennfestigkeit der Schichten, sondern neben Maßhaltigkeit auch eine ausreichende Reiß- und Dehnfestigkeit bei höheren Temperaturen bis 80 °C und mehr. Da keine Vulkanisationsbeschleuniger eingesetzt sind, bestehen auch keine Lagerungsprobleme für noch nicht verlegte Dichtungsbahnen, beidenen ein unerwünschtes langsames Ausvulkanisieren eintreten könnte.

Überraschend hat sich herausgestellt, daß die erfindungsgemäß ausgewählten thermoplastischen Mischungen sich besonders gut durch Kalandrieren bzw. Walzen zu dicken Folien verarbeiten lassen, wobei homogene lunkerfreie Folien bis zu 2 mm Dicke hergestellt werden können. Vorteilhaft werden diese dicken Folien nur noch einseitig mit einer textilen Verstärkungsschicht gemäß der Erfindung kaschiert. Es ist auch möglich, für die Herstellung durch Kalandrieren zur Vorplastifizierung einen Extruder einzusetzen.

Die erfindungsgemäße Dichtungsbahn verbindet in vorteilhafter Weise die Vorteile der elastomeren vulkanisierbaren, aber nicht ausvulkanisierten Kunststoffe insbesondere bezüglich der Witterungsstabilität mit den Vorteilen der thermoplastischen Kunststoffe, nämlich der Schweißbarkeit, insbesondere auch der Quellschweißbarkeit.

Die erfindungsgemäße mehrschichtige Dichtungsbahn kann beispielsweise in der Weise hergestellt werden, daß entsprechend den einzelnen Schichten Folien insbesondere in Dicken von 0,6 bis 0,9 mm kalandriert und ggf. unter Anwendung von Wärme und Druck unter Einbettung der Verstärkungseinlage zusammengewalzt bzw. kaschiert werden. Wirtschaftlich ist es hierbei, für die Außenschichten die gleiche Folie zu verwenden.

Bei der Zusammensetzung der Außenschichten der mehrschichtigen Dichtungsbahn kann es auch zweckmäßig sein, durch eine entsprechende Farbgebung oder beispielsweise Oberflächenprägung einer Außenschicht die Lage der Verstärkung innerhalb der Dichtungsbahn anzuzeigen oder die als Bewitterungsseite mit speziellen Stabilisatoren und/oder UB-Absorbern o. dgl. Hilfsstoffen ausgerüstete bzw. angereicherte Außenschicht zu kennzeichnen.

Nach einer Weiterbildung der Erfindung bestehen alle Schichten aus einem elastomeren Kunststoff auf Basis von Ethylen-Propylen-Dien-Terpolymeren (EPDM) bzw. aus Ethylen-Propylen-Copolymeren (EPM) bzw. Mischungen von EPDM und EPM. Bei einer vorteilhaften Zusammensetzung der erfindungsgemäßen Dichtungsbahn enthaltem die Kunststoffschichten sowohl zur wirtschaftlichen Fertigung der Dichtungsbahn, Verbesserung der Festigkeit und als Verarbeitungshilfe in den Schichten Füllstoffe, bevorzugt

12 bis 22 Gew.-% Ruß, verstärkende bzw. halberstärkende Typen
26 bis 31 Gew.-% Kieselerde (Kieselsäureanhydrid und/oder Kaolinit mit einer Korngröße kleiner 20 μm und mindestens 40 % Anteil kleiner 2 μm)

bezogen auf 100 Gew.-% Schicht. Die erfindungsgemäße Zusammensetzung ermöglicht überraschend eine gute Verarbeitbarkeit, insbesondere Kalandrierbarkeit der Schichten und erfüllt die an eine Dichtungsbahn gestellten Anforderungen. Die Dichtungsbahn kann vorteilhaft auch nur einschichtig aus einer kalandrierten Folie bestehen.

Um die an eine Dichtungsbahn gestellten hohen Anforderungen bezüglich der mechanischen Eigenschaften, Kältefestigkeit, Perforationsfestigkeit auch bei höheren Temperaturen, Schrumpfarmut, Reißfestigkeit, Dehnfähigkeit und Dimensionsstabilität zu gewährleisten, werden als elastomere Kunststoffe insbesondere teilkristalline Ethylen-Propylen-Terpolymere oder teilkristalline Ethylen-Propylen-Copolymere bzw. Mischungen hiervon ausgewählt. Bevorzugt wird ein EPM mit einem Ethylen-Gehalt größer 65 Gew.-% und Propylen-Gehalt kleiner 35 Gew.-% bzw. ein EPDM mit einem Ethylen-Gehalt größer 65 Gew.-% und Propylen-Gehalt kleiner 30 Gew.-% und maximal bis zu 8 Gew.-% Dienkomponente, vorzugsweise weniger als 5 Gew.-% Dienkomponente eingesetzt. Als Dienkomponente kommt beispielsweise Ethylidennorbomen in Frage. Der Mindestgrad an Teilkristallinität der eingesetzten EPDM bzw. EPM wird nach der DSC-Methode im Differenzialabtastkaloriemeter gemessenen Schmelzkurve bestimmt. Das Maximum des Schmelzpeaks gemessen an Temperatur TS in °C nach der DSC-Kurve wird als endothermer Peak bezeichnet, der sehr eng oder aber auch einen Bereich umfassen kann. Bei Ethylen-Propylen-Terpolymeren liegt die Temperatur TS im Bereich um 50 °C. Die zum Schmelzen benötigte Wärmemenge, die sogenannte Schmelzwärme $\Delta H_s$ gemessen ebenfalls nach der DSC-Methode, gibt dann Aufschluß über das Vorhandensein kristalliner Blöcke im Ethylen-Propylen-Terpolymer bzw. Ethylen-Propylen-Copolymer. Solche teilkristallinen EPDM bzw. EPM mit einer Schmelzwärme von mindestens 10 J/g werden erfindungsgemäß bevorzugt eingesetzt.

Für die Auswahl geeigneter elastomerer Kunststoffe, insbesondere der EPDM und EPM ist auch die Festigkeit derselben von Bedeutung, wobei erfindungsgemäß solche EPDM und EPM eingesetzt werden, die einer Reißfestigkeit gemessen nach DIN 53 455 von mindestens 5 N/mm² aufweisen.

Die hohe Trennfestigkeit von mindestens 100 N/5 cm der erfindungsgemäßen mehrschichtigen Dichtungsbahn wird insbesondere durch die Auswahl geeigneter Verstärkungseinlagen mit entsprechend großen Luftzwischenräumen zwischen den Kett- und Schußfäden erreicht, die einen ausreichenden Durchgriff der Kunststoffschichten ermöglichen und damit eine nahezu homogene Verbindung bilden. Bevorzugt werden hierbei Glasgewebe eingesetzt, die der mehrschichtigen Dichtungsbahn eine hohe Dimensionsstabilität verleihen und das im Bauwesen gefürchtete Schrumpfen unter Temperaturwechselbelastung während des Bewitterungsablaufes Sommer/Winter verhindern. Eine vorteilhafte Ausbildung sieht vor, daß die zwischen den Schichten unter Anwendung von Wärme einkaschierte Verstärkungsschicht ein Gewebe, Gelege, Gewirke o. ä. aus Kunststoff- und/oder Glasfasern mit einem Flächengewicht von 20 bis 70 g/m², vorzugsweise 25 bis 50 g/m² und Zwischenräumen des Gewebes, Geleges, Gewirkes o. ä. zwischen den Kett- und Schußfäden von mindestens 2,0 mm, vorzugsweise über 3 mm Abstand, ist und die Mehrschicht-Dichtungsbahn durch den Durchgriff des elastomeren Kunststoffes durch die Zwischenräume des Gewebes o. dgl. eine Trennkraft der Schichten größer 100 N/5 cm aufweist.

Ebenfalls ist die Auswahl geeigneter Füllstoffe für die Kunststoffschichten und Zusatzstoffe, die synergistisch zusammenwirken und die die Eigenschaften der Dichtungsbahn insbesondere ihre mechanischen verbessern von ausschlaggebender Bedeutung. Hierbei bilden eine wesentliche Komponente halbaktive oder aktive Ruße, sogenannte verstärkende Ruße, wobei die Schichten zwischen 12 bis 25 Gew.-% vorzugsweise 12 bis 22 Gew.-% Ruße enthalten. Beispielsweise kommen nach dem Furnace-Verfahren hergestellte Ruße in Frage, die mittlere Teilchengrößen zwischen 30 und 60 nm aufweisen und eine BET-Oberfläche zwischen 30 und 60.

Als verstärkende Füllstoffe und zugleich Verbilligung des Produktes wird bevorzugt Keiselerde, das ist ein Gemisch aus Kieselsäureanhydrid und Kaolinit oder nur Kieselsäureanhydrid eingesetzt, wobei die Korngrößen kleiner 20 um und hiervon mindestens 40 % kleiner als 2 um sein sollten. Es ist jedoch auch möglich, bis zu 2/3 des Kieselerdeanteiles durch andere Füllstoffe ebenfalls in sehr feinkörniger Form, wie Kreide, Kaolin, Talkum, Schwerspat und/oder Glasfasern bzw. Mischungen hiervon zu ersetzen.

Zusätzlich enthalten die Schichten der Dichtungsbahn Stabilisatoren und Alterungsschutzmittel insbesondere auf Basis sterisch gehinderter phenolischer Antioxydantien, phenolischer Phosphite, Thioester aliphatischer Carbonsäuren und ähnliche. Als Gleitmittel für die Verarbeitung werden insbesondere Metallseifen, beispielsweise Calziumseifen, Calziumstearat, Zinkstearat und als Verarbeitungshilfsmittel insbesondere Montansäureester, und/oder hydrierte Kohlenwasserstoffharze eingesetzt. Für die Verarbeitung von EPDM und EPM ist darüber hinaus der Einsatz von Extenderölen auf aliphatischer und/oder naphtenischer Basis erforderlich. Ein bevorzugter Aufbau der Kunststoffschichten gemäß der Erfindung sieht vor, daß sie 35 bis 46 Gew.-% EPDM und/oder EPM, 31 bis 26 Gew.-% Füllstoffe wie Kreide, Kaolin, Kalkum, Schwerspat und/oder Glasfasern in Mischungen mit Kieselerde oder nur Kieselerde, bzw. Kieselsäureanhydrit, 12 bis 7 Gew.-% aliphatischer und/oder naphtenische Extenderöle, 1,0 bis 0,1 Gew.-% Stabilisatoren und Alterungsschutzmittel auf Basis sterisch gehinderter phenolischer Antioxydantien, phenolischer Phosphite, Thioester aliphatischer Carbonsäuren o. dgl., 25 bis 19 Gew.-% verstärkende Ruße, 5,0 bis 0,1 Gew.-% Gleitmittel auf Basis Metallseifen, 2,3 bis 1,8 Gew.-% Verarbeitungshilfsmittel, wie Montansäureester, hydrierte Kohlenwasserstoffharze enthalten. Zusätzlich können die Dichtungsbahnen noch mit weiteren üblichen Zusätzen wie Pigmenten zur Farbgebung und anderem ausgerüstet werden.

Eine vorteilhafte wirtschaftliche Ausführung der erfindungsgemäßen Dichtungsbahn weist nur auf einer Außenseite eine Verstärkungsschicht auf, die entweder ein Kunststofffaservlies mit einem Flächengewicht von 10 bis 300 g/m², insbesondere 80 bis 250 g/m² bei einer Dicke von etwa 0,3 bis 2 mm, insbesondere 0,5 bis 1,2 mm, oder ein Glasfaservlies mit einem Flächengewicht von 25 bis 300 g/m², insbesondere 70 bis 150 g/m² bei einer Dicke von 0,4 bis 2 mm, insbesondere 0,6 bis 1,3 mm mit einem Glasfasertiter von 10 bis 15 μm besteht und mit der elastomeren Schicht haftfest, beispielsweise durch Kaschieren verbunden ist. Als Kunststofffaservliese kommen insbesondere solche auf Basis von Polyesterfasern, Polyamidfasern bzw. Polyolefinfasern wie Polypropylenfasern in Frage. Diese Vliese können thermisch und/oder chemisch verfestigt sein, wobei bei einer chemischen Verfestigung Binder auf Basis Polyacrylate, Polyvinylacetate, Polyvinylpropianat vernetzt oder unvernetzt in Frage kommen. Die Vliese können als Spinnvliese hergestellt sein, als Krempelvliese auf Basis von Kurzstapelfasern, die vernadelt sind und zusätzlich thermofixiert und/oder chemisch gebunden sind. Darüber hinaus können auch sogenannte Naßvliese, die nicht vernadelt sind, eingesetzt werden. Es ist auch möglich, daß die Vliese neben Kunststofffasern ggf. geringere Mengen an anderen verstärkenden Fasern, wie beispielsweise Carbonfasern oder Glasfasern, enthalten.

Die für die außenseitige Verstärkungsschicht ausgewählten und vorzugsweise eingesetzten Glasvliese sind gebundene Vliese mit einem Bindergehalt von 5 bis 40 %, vorzugsweise 10 bis 30 %, wobei die dünneren Vliese einen höheren Bindergehalt als die dickeren Vliese aufweisen. Die Binder sind vorzugsweise auf der Basis Harnstofformaldehydharze, Melaminformaldehydharze, Acrylatharze vernetzt und unvernetzt, bzw. Vinylacetatharze ausgewählt.

Das Aufbringen des Vlieses auf die Dichtungsbahn kann vorzugsweise direkt am Kalander in in-line oder später mittels einer Doublier-Walzenanlage erfolgen. Für das Kalandrieren der erfindungsgemäßen Dichtungsbahn können 4 bzw. 5 Walzenkalander vorteilhaft verwendet werden. Bei einer direkten Kaschierung der Verstärkungsschicht erweist sich ein 5-Walzenkalander als vorteilhaft, da er die Haftung zwischen Vlies und Folie verbessert. Die Kaschierung des Vlieses in-line am Kalander wird bevorzugt bei Temperaturen von 170 bis 220 °C, jedoch in jedem Fall unterhalb der Schmelztemperatur der Kunststofffasern des Vlieses vorgenommen.

Die Eigenschaften der erfindungsgemäßen Dichtungsbahn sind allen Anforderungen im Bauwesen in hervorragender Weise angepaßt. Neben der Funktionstüchtigkeit bei Raumtemperatur ist die Funktionsfähigkeit sowohl bei tiefen Temperaturen bis — 60 °C als auch bei hohen Temperaturen bis etwa 80 °C gegeben. Beständigkeit gegen Witterungseinflüsse und biologische Resistenz ist ebenso gegeben. Darüber hinaus ist aber die leichte Verarbeitbarkeit und die Herstellung von dichten Nahtverbindungen durch das einfache und im Bauwesen eingeführte und bewährte Quellschweißen oder Heißluftschweißen möglich.

Es ist bekannt, daß die elastomeren nicht vernetzten oder nicht ausvulkanisierten oder anvulkanisierten Kunststoffe und Kautschuke sich durch Heißluft oder Heizkeil sehr gut wärmeverschweißen lassen und damit gute homogene Nahtverbindungen herstellbar sind. Solche Fügetechnik ist insbesondere im Bauwesen beim Herstellen von Abdichtungen unter Verwendung von Dichtungsbahnen, die zu großen durchgehenden Dichtungsflächen verbunden werden müssen, erwünscht. Darüber hinaus ist es ein Anliegen der Erfindung, eine Dichtungsbahn auf Basis elastomerer Kunststoffe zu schaffen, die auch durch das bewährte Quellschweißen oder Kalverschweißen verbunden werden kann. Die erfindungsgemäße Dichtungsbahn läßt sich vorteilhaft mittels eines Quellschweißmittels auf Basis einer Mischung von Toluol und Benzin quellverschweißen, wobei bereits ab Temperaturen über 0 °C im Freien auf der Baustelle Nahtverbindungen einwandfreier Qualität hergestellt werden können.

Da die Dichtungsbahnen der Erfindung im Einsatz für das Bauwesen längere Transportwege, Lagerungen auch bei höheren Temperaturen beispielsweise im Sommer durchzustehen haben, ist es wichtig, daß die zusammengerollten Dichtungsbahnen nicht miteinander verkleben. Hierzu wird erfindungsgemäß vorgeschlagen, beispielsweise die Außenschichten mit einer dünnen Talkumschicht o. dgl. einzupudern, um auf diese Weise ein Verkleben der Schichten während des Transports und der Lagerung zu vermeiden. Es ist auch denkbar, eine Trennfolie auf Basis von Polyolefinen, beispielsweise eine sehr dünne Polypropylenfolie von 30 bis 100 μm einzusetzen, die zwischen die einzelnen Lagen der aufgerollten mehrschichtigen Dichtungsbahn eingelegt wird. Hiebei entsteht jedoch das Problem, daß beim Verlegen der mehrschichtigen Dichtungsbahnen auf der Baustelle Trennfolie als Abfall wieder beseitigt werden muß. Die als Trennschicht aufgebrachte Talkumschicht muß so dünn sein, daß sie das Schweißen insbesondere auch das Quellschweißen nicht behindert.

In der Zeichnung sind schematisch erfindungsgemäße Dichtungsbahnen im Querschnitt dargestellt.

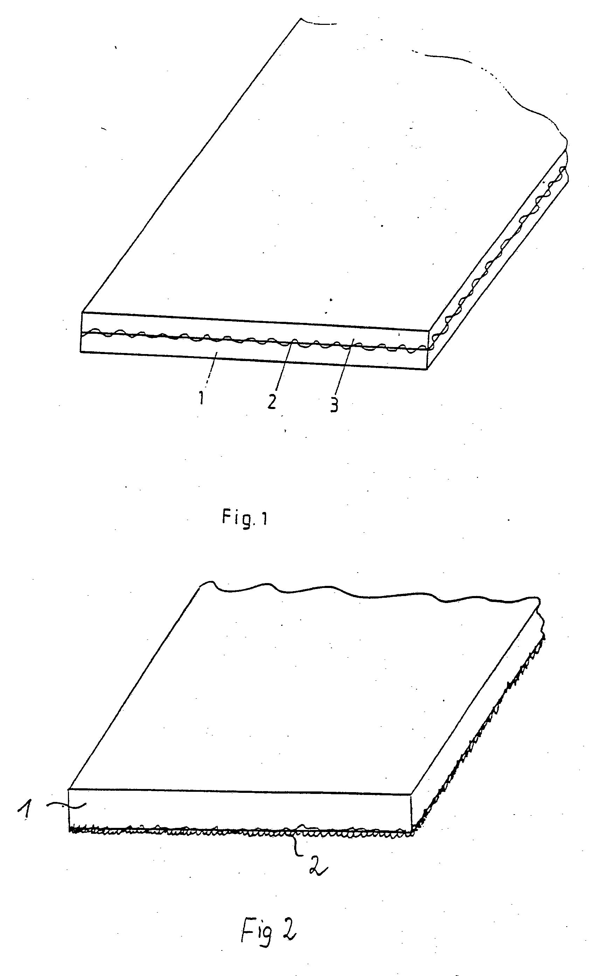

In der Fig. 1 ist eine mehrschichtige Dichtungsbahn mit den beiden Außenschichten 1 und 3 auf Basis EPDM und/oder EPM ohne Vulkanisationsbeschleuniger und der Verstärkungseinlage 2, z. B. Glasgewebe von 40 g/m² Flächengewicht dargestellt. Die Dicke der einzelnen Schichten 1, 3 liegt bevorzugt zwischen 0,6 und 0,9 mm, so daß die Dichtungsbahn eine Gesamtdicke zwischen etwa 1,2 bis 1,8 mm aufweist. Jedoch sind auch dickere Schichten durchaus im einzelnen Anwendungsfall vorsehbar, wobei die einzelnen Schichten 1, 3 auch unterschiedliche Dicken aufweisen können.

Die Verstärkungseinlage kann auch innerhalb der Schichten 1, 3 enden, so daß eine verstärkungsfreie Randzone verbleibt. Die Außenschichten 1, 3 können auch unterschiedlich mit Hilfsstoffen ausgerüstet sein, z. B. in den Farbmitteln, so daß sich Ober- und Unterseite 1, 3 markieren lassen, wodurch eine Verlegehilfe bei der Verlegung der Dichtungsbahn für den Handwerker geschaffen ist.

Nachfolgende Beispiele dienen der Erläuterung der Erfindung ohne diese einzuschränken.

Für die mehrschichtige Dichtungsbahn gem. Fig. 1 werden für die Außenschichten 1, 3 Folien einer Dicke von 0,75 mm aus einer Materialzusammensetzung A gem. Tabelle I und für die Verstärkungseinlage 2 ein Glasgewebe mit einem Flächengewicht von 30 g/m² mit einer Schiebefestausrüstung auf Basis Vinylpropionatdispersion eingesetzt und durch Doublieren zu der mehrschichtigen Dichtungsbahn vereinigt.

Tabelle I

| Zusammensetzung | A (Gew.-Teile) |
|---|---|
| EPDM mit 67 Gew.-% Äthylen 27 Gew.-% Propylen 6 Gew.-% Äthylidennorbonen $\Delta H_s$ 14 J/g, Reißfestigkeit 11,2 N/mm² | 40,0 |
| Sillitin (Kieselerde) | 27,0 |
| Extenderöl | 8,0 |
| Kohlenwasserstoffharz | 2,0 |

5

(Fortsetzung)

| Zusammensetzung | A (Gew.-Teile) |
|---|---|
| Ruß, halbaktiv | 22,5 |
| Calciumseife | 0,3 |
| Antioxydants | 0,2 |

Die hergestellte mehrschichtige Dichtungsbahn hat folgende Eigenschaften :

| | | | | | |
|---|---|---|---|---|---|
| Dicke | DIN 53370 | | | | |
| Reißkraft | DIN 53354 | längs/quer Gewebe | >400/>400 | N/5cm | |
| Reißkraft | DIN 53354 | längs/quer Folie | >450/>450 | N/5cm | |
| Reißdehnung | DIN 53354 | längs/quer Gewebe | 2/2 | % | |
| Reißdehnung | DIN 53354 | längs/quer Folie | >450/>450 | % | |
| Spez. Gewicht | DIN 53479 | | 1270 | kg/m | |
| Trennfestigkeit der Schichten | DIN 53357 | | >100 | N/5cm | |
| Maßänderung bei +80°C nach 6 Stunden | DIN 53377 | | <0,5 | % | |
| Kälteschlagwert | VDCH 22-02 | | 218 | K | |

Zum Verschweißen der Dichtungsbahnen untereinander wird als Quellschweißmittel beispielsweise eine Mischung aus 1 Volumenteil Toluol und 3 Volumenteilen Benzin mit einem Siedebereich von 100 bis 140 °C verwendet. Das Verschweißen der erfindungsgemäßen Dichtungsbahn mit Hilfe des erfindungsgemäßen Quellschweißmittels kann bei Temperaturen ab 0 °C aufwärts durchgeführt werden, bevorzugt über 15 °C.

Bei dem Verfahren zum Herstellen der mehrschichtigen Dichtungsbahn gem. Figur 1 wird im ersten Verfahrensschritt aus den elastomeren Kunststoff auf Basis von Ethylen-Propylen-Dien-Terpolymeren und/ oder Ethylen-Propylen-Copolymeren eine Folie vorzugsweise in einer Dicke zwischen 0,6 bis 0,9 mm kalandriert. Hierbei wird zuerst eine Vormischung aus Ruß und EPDM bzw. EPM bzw. EPDM und EPM hergestellt und dieser Vormischung dann die übrigen Zuschlagstoffe Füllstoffe, Stabilisatoren, Gleitmittel, Extender usw. zugemischt. Das Herstellen einer Vormischung aus Ruß und elastomeren Kunststoff verbessert die mechanischen Eigenschaften der hergestellten Folie. Gemischt wird entweder kontinuierlich in einem Schneckenkneter oder beispielsweise diskontinuierlich in einem Innenkneter, z. B. Stempelkneter, chargenweise. Die Mischung wird bei Temperaturen im Mischer auf 130 bis 220 °C zum Schmelzen gebracht. Aus dem Mischer erhält man eine teigige, plastifizierte, noch nicht vollständig homogenisierte Masse, die dann einem Vorwalzwerk zur weiteren Durchmischung zugeführt wird und hier bei Temperaturen zwischen 170 und 195 °C weiterbearbeitet wird. Anschließend wird die Masse beispielsweise einem Strainer zugeführt und hier abschließend homogenisiert und gefiltert. Beim Austritt aus dem Strainer hat die Masse etwa eine Temperatur von 200-220 °C. Die so vorbereitete Masse kann nunmehr auf den eigentlichen Kalander gegeben werden, wobei sowohl L-Kalander oder F-Kalander benutzt werden können. Bei Aufgabe auf den Walzenspalt des Kalanders hat die Masse dann eine Temperatur zwischen etwa 185 bis 210 °C, bei Verlassen der letzten Kalanderwalze etwa eine Temperatur noch von ca. 170 °C. Die beschriebene Verfahrensführung ist notwendig, um ein homogenes blasenfreies Produkt zu erhalten und ist speziell an die erfindungsgemäß für die Herstellung der Dichtungsbahnen eingesetzten Mischungen und Formassen angepaßt. Für die erfindungsgemäß eingesetzten Materialien und die gewählten Foliendicken sind Abzugsgeschwindigkeiten, d. h. Produktionsgeschwindigkeiten am Kalander zwischen 10 und 20 m/min möglich. Da die eingesetzten elastomeren Mischungen sehr stark zum Kleben neigen, da sie oberhalb 100 °C weich werden und ihre mechanische Festigkeit verliert, ist insbesondere die Herstellung der Vormischung aus Ruß und EPDM ein wesentlicher Schritt zur Verbesserung der Kalandrierfähigkeit.

Zum Herstellen der Mehrschichtbahn ist dann noch eine Dublier- oder Kaschieranlage erforderlich. Hierbei werden von zwei Seiten zwei kalandrierte Folien gleicher Dicke, beispielsweise 0,75 mm oder unterschiedlicher Dicke, wie 0,5 und 0,8 mm vorgewärmt, z. B. über Heizwalzen, die eine Temperatur von 100 bis 150 °C aufweisen, geführt und/oder mittels Heizstrahler oberflächlich auf der mit dem Glasgewebe zu verbindenden Seite erwärmt. Die oberflächliche Erwärmung liegt etwa im Bereich zwischen 90 bis 140 °C für die kalandrierten Folien. Danach werden beide Folien in einem von zwei Kaschierwalzen gebildeten Walzenspalt zusammengeführt, wobei in die Mitte das Glasgewebe einläuft. Es ist jedoch auch möglich, das Glasgewebe bereits vorzeitig zuerst nur mit einer Folie in Verbindung zu bringen und dann nachfolgend die zweite Folie zuzukaschieren. Im Kaschierspalt herrscht ein Druck von 3 bis 5 bar. Nach dem Kaschieren durchläuft die so hergestellte Mehrschichtbahn nachfolgend ggf. eine sogenannte Prägestation in der ebenfalls nochmals ein Druck von 3 bis 6 bar im Walzenspalt aufgebracht wird. Danach wird die Mehrschichtbahn abgezogen, abgekühlt, ggf. oberflächlich gepudert um ein Verkleben zu verhindern und aufgewickelt.

Es kann z. B. auch eine der beiden Kaschierwalzen als Prägewalze ausgebildet sein, so daß eine separate Prägestation entfallen kann.

### Beispiel B

Die nachfolgend beschriebene Mischung B wird wie im vorangehenden Beispiel die Mischung A beschrieben, in einem Kneter gemischt, über Walze und Strainer dem Kalander zugeführt und zu einer Folie von 1,2 mm ausgewalzt.

#### Tabelle II

| Zusammensetzung | B (Gew.-Teile) |
|---|---|
| EPDM mit 67 Gew.-% Ethylen<br>27 Gew.-% Propylen<br>6 Gew.-% Ethyliden-norbornen<br>$\triangle$HS: 14 J/g<br>Reißfestigkeit: 11.2 N/cm$^2$ | 37 |
| Sillitin (Kieselerde) | 23 |
| Kieselsäureanhydrit | 15 |
| Ruß, halbaktiv | 15,4 |
| Extenderöl | 7 |
| Verarbeitungshilfsmittel | 2 |
| Calciumseife | 0,5 |
| Antioxidant | 0,1 |

In den letzten Spalt des Kalanders läßt man folgende Vliese einlaufen und erhält eine einseitig mit Vlies kaschierte Dichtungsbahn.

B1 : ein Spinnvlies aus endlosen Polyesterfasern mit einem Flächengewicht von 200 g/m². Dieses Vlies ist thermisch verfestigt. Die mechanischen Eigenschaften sind in der nachfolgenden Tabelle III aufgelistet.

B2 : ein vernadeltes Spinnvlies aus endlosen Polyesterfasern mit einem Flächengewicht von 200 g/m². Dieses Vlies wurde noch zusätzlich thermofixiert. Die mechanischen Eigenschaften siehe Tabelle III.

B3 : ein aus Polyester-Stapelfasern auf der Krempel hergestelltes vernadeltes Vlies mit einem Flächengewicht von 200 g/m². Dieses Vlies wurde noch zusätzlich thermofixiert. Die mechanischen Eigenschaften siehe Tabelle III.

B4 : ein Krempelvlies wie B3 das zusätzlich 5 % Acrylatbinder enthält.

B5 : ein aus Glasfasern mit einem Durchmesser von 10 μm hergestelltes Vlies mit einem Flächengewicht von 100 g/m² und einem Bindergehalt von 20 % Harnstoff-Formaldehydharz. Die mechanischen Eigenschaften siehe Tabelle III.

Die hergestellten einseitig verstärkten Dichtungsbahnen weisen die in der nachfolgenden Tabelle III aufgeführten Eigenschaften auf :

Tabelle III

| | Vers. B 1 | Vers. B 2 | Vers. B 3 | Vers. B 4 | Vers. B 5 |
|---|---|---|---|---|---|
| Reißkraft DIN 53354 längs Vlies [N/5 cm] | 596 | 540 | 435 | 650 | 200 |
| Reißkraft DIN 53354 längs Bahn [N/5 cm] | 475 | 475 | 510 | 745 | 400 |
| Reißdehnung DIN 53354 längs Vlies [%] | 27 | 76 | 260 | 140 | < 3 |
| Reißdehnung DIN 53354 längs Bahn [%] | 354 | 305 | 430 | 260 | 300 |
| Maßänderung DIN 53377 [%] + 80° nach 6 Stunden | < 1 | < 1 | < 1 | < 1 | < 1 |
| Kältebeschlagswert VDCH 22-02 [K] | 218 | 218 | 218 | 218 | 218 |

In der Zeichnung Fig. 2 ist schematisch eine Dichtungsbahn mit einer Folie 1 und einer auf der Unterseite der Folie aufkaschierten Verstärkungsschicht 2 dargestellt. Die Verstärkungsschicht 2 kann auch schmaler als die Folie sein und einen ca. 5 bis 10 cm breiten Randstreifen der Folie zum Verbinden mittels Schweißen freilassen.

**Patentansprüche**

1. Dichtungsbahn für das Bauwesen aus mindestens einer Schicht aus elastomeren, thermisch und/oder durch Lösungsmittel bzw. Quellmittel verschweißbaren Kunststoffen aus Ethylen-Propylen-Dien-Terpolymeren und/oder Ethylen-Propylen-Copolymeren und ggf. üblichen Zusatzstoffen, mit einer textilen Verstärkungsschicht, die entweder zwischen zwei Schichten aus elastomerem Kunststoff eingebettet und/oder außenseitig auf einer Schicht aufgebracht ist, dadurch gekennzeichnet, daß alle elastomere Kunststoffe enthaltende Schichten vulkanisationsbeschleunigerfrei sind und die elastomeren Kunststoffe

35 bis 46 Gew.-% EPDM oder EPM bzw. Mischungen aus EPDM und EPM
40 bis 58 Gew.-% Füllstoffe, hiervon bis zu 50 Gew.-% Ruß
5 bis 12 Gew.-% Extender o. ä.
1,0 bis 0,1 Gew.-% Stabilisatoren und Alterungsschutzmittel
5 bis 1,9 Gew.-% Gleitmittel und Verarbeitungshilfsmittel

enthalten.

2. Dichtungsbahn nach Anspruch 1, dadurch gekennzeichnet, daß als Füllstoffe in der Schicht

12 bis 22 Gew.-% Ruß und

8

26 bis 31 Gew.-% Kieselerde (Kieselsäureanhydrid und/oder Kaolinit mit einer Korngröße kleiner 20 μm und mindestens 40 % kleiner 2 μm)

bezogen auf 100 Gew.-% Schicht enthalten sind.

3. Dichtungsbahn nach einem der Ansprüche 1 oder 2, dadurch gekennzeichnet, daß die Schichten

| 35 | bis 46 | Gew.-% | EPDM und/oder EPM |
|----|--------|--------|-------------------|
| 31 | bis 26 | Gew.-% | Füllstoffe wie Kreide, Kaolin, Talkum, Schwerspat und/oder Glasfasern in Mischungen mit Kieselerde oder nur Kieselerde, bzw. Kieselsäureanhydrit |
| 12 | bis 7 | Gew.-% | aliphatische und/oder naphthenische Extenderöle, |
| 1,0 | bis 0,1 | Gew.-% | Stabilisatoren und Alterungsschutzmittel wie sterisch gehinderte phenolische Antioxydantien, phenolische Phosphite, Thioester aliphatischer Carbonsäuren, |
| 25 | bis 12 | Gew.-% | verstärkende Rußtypen |
| 2,0 | bis 0,1 | Gew.-% | Gleitmittel wie Metallseifen |
| 2,3 | bis 1,8 | Gew.-% | Verarbeitungshilfsmittel wie Montansäureester, hydrierte Kohlenwasserstoffharze |

enthalten.

4. Dichtungsbahn nach einem der Ansprüche 1 bis 3, dadurch gekennzeichnet, daß ein EPM aus 65 Gew.-% Äthylen und 35 Gew.-% Propylen bzw. ein EPDM aus 65 Gew.-% Äthylen, 30 Gew.-% Propylen und bis max. 8 Gew.-% Dienkomponente, vorzugsweise kleiner 5 Gew.-% Dienkomponente eingesetzt ist.

5. Dichtungsbahn nach einem der Ansprüche 1 bis 4, dadurch gekennzeichnet, daß das EPDM als Dienkomponente Äthylidennorbonen enthalten.

6. Dichtungsbahn nach einem der Ansprüche 1 bis 5, dadurch gekennzeichnet, daß das eingesetzte EPDM bzw. EPM bzw. Abmischungen hiervon teilkristallin sind und eine Schmelzwärme nach DSC von mindestens $\Delta H_s$ 10 J/g aufweisen.

7. Dichtungsbahn nach einem der Ansprüche 1 bis 6, dadurch gekennzeichnet, daß ein EPDM bzw. EPM verwendet ist, däs eine Reißfestigkeit von mindestens 5 N/mm² aufweist.

8. Dichtungsbahn nach einem der Ansprüche 1 bis 7, dadurch gekennzeichnet, daß die zwischen den Schichten unter Anwendung von Wärme einkaschierte Verstärkungsschicht ein Gewebe, Gelege, Gewirke o. ä. aus Kunststoff- und/oder Glasfasern mit einem Flächengewicht von 20 bis 70 g/m², vorzugsweise 25 bis 50 g/m² und Zwischenräumen des Gewebes, Geleges, Gewirkes o. ä. zwischen den Kettund Schußfäden von mindestens 2,0 mm, vorzugsweise über 3 mm Abstand, ist, und die Mehrschicht-Dichtungsbahn durch den Durchgriff des elastomeren Kunststoffes durch die Zwischenräume des Gewebes o. dgl. eine Trennkraft der Schichten größer 100 N/5 cm aufweist.

9. Dichtungsbahn nach Anspruch 8, dadurch gekennzeichnet, daß zwei kalandrierte Schichten aus elastomeren Kunststoffen in einer Dicke von 0,6 bis 0,9 mm unter Anwendung von Druck und Wärme mit der Verstärkungsschicht kaschiert sind.

10. Dichtungsbahn nach einem der Ansprüche 1 bis 9, dadurch gekennzeichnet, daß als außenseitige Verstärkungsschicht ein Kunststoffaservlies mit einem Flächengewicht von 10 bis 300 g/m², insbesondere 80 bis 250 g/m² bei einer Dicke von 0,3 bis 2 mm, insbesondere 0,5 bis 1,2 mm mit der elastomeren Schicht haftfest verbunden ist.

11. Dichtungsbahn nach einem der Ansprüche 1 bis 9, dadurch gekennzeichnet, daß als außenseitige Verstärkungsschicht eine Glasfaservlies mit einem Flächengewicht von 25 bis 300 g/m², insbesondere 70 bis 150 g/m² bei einer Dicke von 0,4 bis 2 mm insbesondere 0,6 bis 1,3 mm mit einem Glasfasertiter von 10 bis 15 μm mit der elastomeren Schicht haftfest verbunden ist.

12. Dichtungsbahn nach einem der Ansprüche 1 bis 11, dadurch gekennzeichnet, daß die Außenschichten mit einer dünnen Talkumschicht o. dgl. eingepudert sind, so daß die transportfähige zusammengerollte Dichtungsbahn nicht zusammenklebt.

## Claims

1. Impervious sheeting for the construction industry formed of at least one layer of elastomeric plastics from of ethylene-propylene-diene copolymers and/or ethylene-propylene copolymers weldable thermally and/or by solvents or swelling agents, with a textile reinforcing layer which is embedded either between two layers of elastomeric plastics and/or is applied to one layer on the exterior surface, characterised in that all layers containing an elastomeric plastics are vulcanisation accelerator free and the elastomeric plastics contain

| 35 | to 46 | % by weight EPDM or EPM or mixtures of EPDM and EPM |
|----|-------|------|
| 40 | to 58 | % by weight of fillers, of which up to 50 % by weight is carbon black |
| 5 | to 12 | % by weight of extenders or the like |
| 1.0 | to 0.1 | % by weight of stabilisers and ageing protecting materials |
| 5 | to 1.9 | % by weight of lubricants and working auxiliaries. |

2. Impervious sheeting according to claim 1, characterised in that there are contained in the layer as fillers

12 to 22 % by weight of carbon black
26 to 31 % by weight of silica (silicic acid anhydride and/or kaolinite with a particle size of less than 20 μm and at least 40 % smaller than 2 μm)

related to 100 % by weight of the layer.

3. Impervious sheeting according to one of claims 1 or 2, characterised in that the layers contain

35 to 46 % by weight of EPDM and/or EPM
31 to 26 % by weight of fillers such as chalk, kaolin, talc, heavy spar and/or glass fibres in mixtures with silica, or only silica or possibly silicic acid anhydride
12 to 7 % by weight of aliphatic and/or naphthenic extender oils
1.0 to 0.1 % by weight of stabilisers and ageing protecting agents such as stearically hindered phenolic anti-oxidants, phenolic phosphites, thioesters of aliphatic carboxylic acids,
25 to 12 % by weight of reinforcing carbon black types
2.0 to 0.1 % by weight of lubricants such as metal soaps
2.3 to 1.8 % by weight of working auxiliary materials such as Montan acid esters, hydrogenated hydrocarbon resins.

4. Impervious sheeting according to one of claims 1 to 3, characterised in that there is employed an EPM formed of 65 % by weight ethylene and 35 % by weight proppylene or an EPDM formed of 65 % by weight ethylene, 30 % by weight propylene and up to a maximum of 8 % by weight diene components, preferably less than 5 % by weight diene components. ·

5. Impervious sheeting according to one of claims 1 to 4, characterised in that the EPDM contains ethylidene-norbornene as diene component.

6. Impervious sheeting according to one of claims 1 to 5, characterised in that the EPDM or EPM or mixtures thereof which are employed are partially crystalline and possess a melting heat according to DSC of at least $\Delta H_s$ 10 J/g.

7. Impervious sheeting according to one of claims 1 to 6, characterised in that an EPDM or EPM is used which possesses a tearing strength of at least 5 N/mm$^2$.

8. Impervious sheeting according to one of claims 1 to 7, characterised in that the reinforcing sheet laminated between the layers with use of heat is a web, mat, fabric or the like formed of plastics and/or glass fibres with a weight per unit area of 20 to 70 g/m$^2$, preferably 25 to 50 g/m$^2$ and interstices of the web, mat, fabric or the like between the warp and weft fibres of at least 2.0 mm, preferably above 3 mm separation, and the multi-layer impervious sheeting possesses, as a result of the gripping of the elastomeric plastics material through the interstices of the web or the like, a separation force between the layers greater than 100 N/5 cm.

9. Impervious sheeting according to claim 8, characterised in that two calandered layers of elastomeric plastics material having a thickness of 0.6 to 0.9 mm are laminated with the reinforcing layer with use of pressure and heat.

10. Impervious sheeting according to one of claims 1 to 9, characterised in that a plastics fleece with a weight per unit area of 10 to 300 g/m$^2$, in particular 80 to 250 g/m$^2$ with a thickness of 0.3 to 2 mm, in particular 0.5 to 1.2 mm, is connected adhesively with elastomeric layer as external reinforcing layer.

11. Impervious sheeting according to one of claims 1 to 9, characterised in that a glass fibre fleece with a weight per unit area of 25 to 300 g/m$^2$, in particular 70 to 150 g/m$^2$ with a thickness of 0.4 to 2 mm, in particular 0.6 to 1.3 mm with a glass fibre titre of 10 to 15 μm is adhesively bonded with the elastomeric layer as external reinforcing layer.

12. Impervious sheeting according to one of claims 1 to 11, characterised in that the external layers are powdered with a thin talc layer or the like so that the transportable rolled up impervious sheeting does not stick together.

## Revendications

1. Bande d'étanchéité pour le bâtiment, constituée d'au moins une couche de matière plastique élastomère, soudable thermiquement et/ou sous l'action d'un solvant ou d'un agent de gonflement, en terpolymère éthylène-propylène-diène et/ou en copolymère éthylène-propylène, et le cas échéant des adjuvants usuels, avec une couche textile de renfort, qui est noyée entre deux couches de la matière plastique élastomère et/ou disposée sur une couche du côté externe, caractérisée en ce que toutes les couches contenant des matières plastiques élastomères ne contiennent pas d'agent d'accélération de la vulcanisation, et que les matières plastiques élastomères contiennent :

35 à 46 % en poids de EPDM ou de EPM ou de mélange de EPDM et de EPM
40 à 58 % en poids de charge, dont jusqu'à 50 % en poids de noir de fumée

10

5 à 12 % en poids d'un diluant ou similaire
1,0 à 0,1 % en poids de stabilisateur et d'un agent de protection contre le vieillissement
5 à 1,9 % en poids d'un lubrifiant et d'un agent auxiliaire de traitement.

2. Bande d'étanchéité selon la revendication 1, caractérisée en ce que sont contenus, en tant que charge dans la couche :

12 à 22 % en poids de noir de fumée, et
26 à 31 % en poids de terre de silice (anhydride de l'acide silicique et/ou kaolinite, avec une dimension de grain inférieure à 20 μm et inférieure à 2 μm pour au moins 40 %)

par rapport à 100 % en poids de la couche.

3. Bande d'étanchéité selon l'une des revendications 1 ou 2, caractérisée en ce que les couches contiennent :

35 à 46 % en poids de EPDM et/ou EPM
31 à 26 % en poids de charge telle que de la craie, du kaolin, du talc, de la barytine, et/ou des fibres de verre, en mélange avec de la terre de silice ou bien seulement de la terre de silice, ou anhydride d'acide silicique
12 à 7 % en poids d'huile diluante aliphatique et/ou naphténique
1,0 à 0,1 % en poids de stabilisateur et d'un agent de protection contre le vieillissement, tels que les antioxydants phénoliques à gène stérique, les phosphites phénoliques, les thioesters d'acides carboxyliques aliphatiques
25 à 12 % en poids de type renforçant de noir de fumée
2,0 à 0,1 % en poids d'un lubrifiant comme les savons métalliques
2,3 à 1,8 % en poids d'un agent auxiliaire de traitement comme un montanate, ou une résine hydrocarbonée hydrogénée.

4. Bande d'étanchéité selon l'une des revendications 1 à 3, caractérisée en ce qu'on y introduit un EPM constitué de 65 % en poids d'éthylène et de 35 % en poids de propylène ou un EPDM constitué de 65 % en poids d'éthylène, de 30 % en poids de propylène, et d'au maximum de 8 % en poids, de préférence moins de 5 % en poids, de composant diène.

5. Bande d'étanchéité selon l'une des revendications 1 à 4, caractérisée en ce que le EPDM contient en tant que composant diène de l'éthylidène-norbonène.

6. Bande d'étanchéité selon l'une des revendications 1 à 5, caractérisée en ce que le EPDM, ou le EPM, ou leurs mélanges, introduits sont partiellement cristallins, et présentent une chaleur de fusion $\Delta H_s$, mesurée selon DSC, d'au moins 10 J/g.

7. Bande d'étanchéité selon l'une des revendications 1 à 6, caractérisée en ce que l'on utilise un EPDM ou un EPM qui présente une résistance à la traction d'au moins 5 N/mm².

8. Bande d'étanchéité selon l'une des revendications 1 à 7, caractérisée en ce que la couche de renfort noyée entre les couches par emploi de la chaleur, est un tissu, un mat, un tricot ou similaire, en matière plastique et/ou en fibres de verre, avec un poids surfacique de 20 à 70 g/m², de préférence de 25 à 50 g/m², et des ouvertures du tissu, du mat, du tricot, ou similaire, d'au moins 2,0 mm, de préférence supérieures à 3 mm, de distance entre les fils de chaîne et les fils de trame, et la bande d'étanchéité à plusieurs couches présente, de par la pénétration de la matière plastique élastomère à travers les ouvertures du tissu ou similaire, une résistance à la séparation des couches supérieures à 100 N/5 cm.

9. Bande d'étanchéité selon la revendication 8, caractérisée en ce que deux couches calandrées de matière plastique élastomère d'une épaisseur de 0,6 à 0,9 mm sont enduites avec la couche de renfort par emploi de la pression et de la chaleur.

10. Bande d'étanchéité selon l'une des revendications 1 à 9, caractérisée en ce que, en tant que couche de renfort externe, un non-tissé de fibres de matière plastique ayant un poids surfacique de 10 à 300 g/m², en particulier de 80 à 250 g/m², pour une épaisseur de 0,3 à 2 mm, en particulier de 0,5 à 1,2 mm, est fixé par adhérence à la couche élastomère.

11. Bande d'étanchéité selon l'une des revendications 1 à 9, caractérisée en ce que, comme couche de renfort externe, un non-tissé de fibres de verre, ayant un poids surfacique de 25 à 300 g/m², en particulier de 70 à 150 g/m², pour une épaisseur de 0,4 à 2 mm, en particulier de 0,6 à 1,3 mm, avec un titre de fibres de verre de 10 à 15 μm, est fixé par adhérence à la couche élastomère.

12. Bande d'étanchéité selon l'une des revendications 1 à 11, caractérisée en ce que les couches externes sont poudrées avec une couche mince de talc ou similaire, de façon que la bande étanche enroulée, susceptible d'être transportée, ne se colle pas.

0 082 490

Fig. 1

Fig 2

1